# EUROPEAN PATENT APPLICATION

(11) **EP 4 036 194 A1**
(43) Date of publication of application: **03.08.2022**
(21) Application number: 20868998.4
(22) Date of filing: 18.09.2020
(51) Int. Cl.: C10M 169/04, C10N 30/08, C10N 40/30, C10M 105/38, C10M 107/24, C10M 107/34, C10M 129/18, C09K 5/04

(54) **LUBRICATING OIL COMPOSITION FOR REFRIGERATORS**

(30) Priority: 27.09.2019 JP 2019177809
(71) Applicant: Idemitsu Kosan Co.,Ltd., Tokyo 100-8321 (JP)
(72) Inventor: MATSUMOTO, Tomoya, Ichihara-shi, Chiba 299-0107 (JP)
(74) Representative: Hoffmann Eitle
(86) International application number: PCT/JP2020/035568
(87) International publication number: WO 2021/060206

(57) **Abstract**

The present invention is directed to providing a lubricating oil composition for refrigerators, which has excellent thermal stability when used with a refrigerant comprising difluoromethane (R32), trifluoroiodomethane (CF₃I), and at least one selected from saturated fluorinated hydrocarbon compounds (HFC) other than difluoromethane (R32). The lubricating oil composition comprises: a base oil (A) comprising at least one selected from a polyoxyalkylene glycol, a polyvinyl ether, a copolymer of a poly(oxy)alkylene glycol or a monoether thereof and a polyvinyl ether, and a polyol ester; and an aliphatic epoxy compound (B), wherein the content of the aliphatic epoxy compound (B) is more than 2.0% by mass based on the total amount of the lubricating oil composition for refrigerators.

## Description

### Technical Field

The present invention relates to a lubricating oil composition for refrigerators.

### Background Art

A refrigerator, for example a compression refrigerator, generally has a structure which includes at least a compressor, a condenser, an expansion mechanism (an expansion valve, etc.) and an evaporator, and in which a mixture of a refrigerant and a lubricating oil composition for refrigerators (hereinafter also referred to as "composition for refrigerators") is circulated in a closed system.

Hydrochlorofluorocarbons (HCFC), which have been commonly used as a refrigerant for a refrigerator such as a compression refrigerator, are being replaced by fluorinated hydrocarbon compounds which are environmentally friendly. A saturated fluorinated hydrocarbon compound (Hydro-Fluoro-Carbon, hereinafter also referred to as "HFC"), such as 1,1,1,2-tetrafluoroethane (R134a) or difluoromethane (R32), is used as a fluorinated hydrocarbon compound.

The use of an unsaturated fluorinated hydrocarbon compound (Hydro-Fluoro-Olefin, hereinafter also referred to as "HFO") having a low global warming potential, such as 1,3,3,3-tetrafluoropropene (R1234ze) or 2,3,3,3-tetrafluoropropene (R1234yf), is also being studied.

Patent document 1 describes a mixed refrigerant comprising a combination of R134a and CF₃I, a mixed refrigerant comprising a combination of R152a and CF₃I, and a mixed refrigerant comprising a combination of R1234ze and CF₃I. Patent document 1 teaches that the solubility of such a refrigerant in a refrigerator oil can be enhanced by using, as the refrigerator oil, a particular polyoxyalkylene glycol having a kinematic viscosity at 40°C of 10 cSt to 300 cSt (10 mm²/s to 300 mm²/s).

### Citation List

### Patent Literature

Patent document 1: JP 2009-143970 A

### Summary of Invention

### Technical Problem

The combustibility of a refrigerant tends to increase as its global warming potential is reduced. Therefore, it has been difficult to obtain an incombustible refrigerant while sufficiently reducing its global warming potential. However, some refrigerants have now been proposed which have a sufficiently reduced global warming potential and yet are incombustible. For example, a refrigerant is known which, paying attention to the fact that trifluoroiodomethane (CF₃I) is incombustible and yet has a low global warming potential (GWP) and a low ozone depletion potential (ODP), comprises difluoromethane (R32), trifluoroiodomethane (CF₃I), and at least one selected from saturated fluorinated hydrocarbon compounds (HFC) other than difluoromethane (R32).

However, no such refrigerant has been studied in patent document 1.

It is, therefore, an object of the present invention to provide a lubricating oil composition for refrigerators, which is excellent in thermal stability when used with a refrigerant comprising difluoromethane (R32), trifluoroiodomethane (CF₃I), and at least one selected from saturated fluorinated hydrocarbon compounds (HFC) other than difluoromethane (R32).

### Solution to Problem

The present inventors, through intensive studies, have found that the above object can be achieved by a lubricating oil composition for refrigerators, containing an aliphatic epoxy compound in an amount of more than 2.0% by mass based on the total amount of the composition. The present invention has been accomplished based on this finding.

Thus, the present invention relates to the following [1] to [8].
[1] A lubricating oil composition for refrigerators and for use with a refrigerant comprising difluoromethane (R32), trifluoroiodomethane (CF₃I), and at least one compound (α) selected from saturated fluorinated hydrocarbon compounds (HFC) other than difluoromethane (R32), the composition comprising: a base oil (A) comprising at least one selected from a polyoxyalkylene glycol, a polyvinyl ether, a copolymer of a poly(oxy)alkylene glycol or a monoether thereof and a polyvinyl ether, and a polyol ester; and an aliphatic epoxy compound (B), wherein the content of the aliphatic epoxy compound (B) is more than 2.0% by mass based on the total amount of the lubricating oil composition for refrigerators.
[2] The lubricating oil composition for refrigerators as described in [1] above, wherein in the refrigerant, the total content of difluoromethane (R32) and trifluoroiodomethane (CF₃I) is not less than 20% by mass and not more than 99% by mass based on the total amount of the refrigerant, the content of trifluoroiodomethane (CF₃I) is not less than 5% by mass and not more than 80% by mass based on the total amount of the refrigerant, and the content of the compound (α) is not less than 0.1% by mass based on the total amount of the refrigerant.
[3] The lubricating oil composition for refrigerators as described in [1] or [2] above, wherein in the refrigerant, the total content of difluoromethane (R32) and trifluoroiodomethane (CF₃I) is not less than 30% by mass and not more than 95% by mass based on the total amount of the refrigerant, the content of trifluoroiodomethane (CF₃I) is not less than 10% by mass and not more than 60% by mass based on the total amount of the refrigerant, and the content of the compound (α) is not less than 1% by mass based on the total amount of the refrigerant.
[4] The lubricating oil composition for refrigerators as described in any one of [1] to [3] above, wherein in the refrigerant, the total content of difluoromethane (R32) and trifluoroiodomethane (CF₃I) is more than 50% by mass and not more than 90% by mass based on the total amount of the refrigerant, the content of trifluoroiodomethane (CF₃I) is not less than 15% by mass and not more than 50% by mass based on the total amount of the refrigerant, and the content of the compound (α) is not less than 5% by mass based on the total amount of the refrigerant.
[5] The lubricating oil composition for refrigerators as described in any one of [1] to [4] above, wherein the compound (α) is 1,1,1,2,2-pentafluoroethane (R125).
[6] The lubricating oil composition for refrigerators as described in any one of [1] to [5] above, further comprising a phenolic antioxidant (C).
[7] The lubricating oil composition for refrigerators as described in any one of [1] to [6] above, which is to be used in an automotive air conditioner, an electric automotive air conditioner, a gas heat pump, an air conditioner, a refrigerator, an automatic vending machine, a showcase, a hot-water supply system, a refrigerating system or a heating system.
[8] A mixture comprising the lubricating oil composition for refrigerators as described in any one of [1] to [7] above, and a refrigerant comprising difluoromethane (R32), trifluoroiodomethane (CF₃I), and at least one compound (α) selected from saturated fluorinated hydrocarbon compounds (HFC) other than difluoromethane (R32).

### Advantageous Effects of Invention

The present invention makes it possible to provide a lubricating oil composition for refrigerators, which is excellent in thermal stability when used with a refrigerant comprising difluoromethane (R32), trifluoroiodomethane (CF₃I), and at least one selected from saturated fluorinated hydrocarbon compounds (HFC) other than difluoromethane (R32).

### Description of Embodiments

Lower limit values and upper limit values, which are set forth herein in a stepwise manner in preferable numerical ranges (e.g., content ranges), can be combined independently. For example, from the phrase "preferably not less than 10, more preferably not less than 30, even more preferably not less than 40" that defines the lower limits, and from the phrase "preferably not more than 90, more preferably not more than 80, even more preferably not more than 70" that defines the upper limits, a range such as "not less than 10 and not more than 70", "not less than 30 and not more than 70" or "not less than 40 and not more than 80", which defines a combination of a lower limit and an upper limit which are each selected independently, can be selected. Further, from the same phrases, a range such as "not less than 40" or "not more than 70", which defines only one of a lower limit and an upper limit", can be selected. The same holds true for a preferable range that can be selected from a phrase such as "preferably not less than 10 and not more than 90, more preferably not less than 30 and not more than 80, even more preferably not less than 40 and not more than 70" or "preferably 10 to 90, more preferably 30 to 80, even more preferably 40 to 70". The phrase "10 to 90", for example, herein has the same meaning as "not less than 10 and not more than 90". Numerical values accompanied by phrases such as "not less than", "not more than", "less than" and "more than" can be arbitrarily combined herein.

### [Lubricating Oil Composition for Refrigerators]

The lubricating oil composition for refrigerators of the present invention is a lubricating oil composition for refrigerators and for use with a refrigerant comprising difluoromethane (R32), trifluoroiodomethane (CF₃I), and at least one compound (α) selected from saturated fluorinated hydrocarbon compounds (HFC) other than difluoromethane (R32). The lubricating oil composition comprises at least one base oil (A) selected from a polyoxyalkylene glycol, a polyvinyl ether, a copolymer of a poly(oxy)alkylene glycol or a monoether thereof and a polyvinyl ether, and a polyol ester, and an aliphatic epoxy compound (B). The content of the aliphatic epoxy compound (B) is more than 2.0% by mass based on the total amount of the lubricating oil composition for refrigerators.

### <Refrigerant>

The lubricating oil composition for refrigerators of the present invention is to be used with a refrigerant which comprises difluoromethane (R32), trifluoroiodomethane (CF₃I), and at least one compound (α) selected from saturated fluorinated hydrocarbon compounds (HFC) other than difluoromethane (R32).

### (Preferred Embodiment of the Refrigerant)

In one embodiment of the present invention, the refrigerant for use in the present invention preferably has the following features from the viewpoint of ensuring low combustibility and excellent safety of the refrigerant while reducing the global warming potential.
- The total content of difluoromethane (R32) and trifluoroiodomethane (CF₃I) is not less than 20% by mass and not more than 99% by mass based on the total amount of the refrigerant.
- The content of trifluoroiodomethane (CF₃I) is not less than 5% by mass and not more than 80% by mass based on the total amount of the refrigerant, provided that the content of trifluoroiodomethane (CF₃I) is lower than the total content of difluoromethane (R32) and trifluoroiodomethane (CF₃I).
- The content of the compound (α) is not less than 0.1% by mass based on the total amount of the refrigerant.

### (More Preferred Embodiment of the Refrigerant)

In one embodiment of the present invention, the refrigerant for use in the present invention more preferably has the following features from the viewpoint of ensuring lower combustibility and more excellent safety of the refrigerant while further reducing the global warming potential.
- The total content of difluoromethane (R32) and trifluoroiodomethane (CF₃I) is not less than 30% by mass and not more than 95% by mass based on the total amount of the refrigerant.
- The content of trifluoroiodomethane (CF₃I) is not less than 10% by mass and not more than 60% by mass based on the total amount of the refrigerant, provided that the content of trifluoroiodomethane (CF₃I) is lower than the total content of difluoromethane (R32) and trifluoroiodomethane (CF₃I).
- The content of the compound (α) is not less than 1% by mass based on the total amount of the refrigerant.

### (Even More Preferred Embodiment of the Refrigerant)

In one embodiment of the present invention, the refrigerant for use in the present invention even more preferably has the following features from the viewpoint of ensuring even lower combustibility and even more excellent safety of the refrigerant while even further reducing the global warming potential.
- The total content of difluoromethane (R32) and trifluoroiodomethane (CF₃I) is more than 50% by mass and not more than 90% by mass based on the total amount of the refrigerant.
- The content of trifluoroiodomethane (CF₃I) is not less than 15% by mass and not more than 50% by mass based on the total amount of the refrigerant.
- The content of the compound (α) is not less than 5% by mass based on the total amount of the refrigerant.

### (Compound (α))

A fluoride of an alkane having 1 to 4 carbon atoms, other than difluoromethane (R32), is an example of the at least one compound (α) selected from saturated fluorinated hydrocarbon compounds (HFC) other than difluoromethane (R32). The fluoride of an alkane having 1 to 4 carbon atoms may be, for example, at least one selected from trifluoromethane (R23), 1,1-difluoroethane (R152a), 1,1,1-trifluoroethane (R143a), 1,1,2-trifluoroethane (R143), 1,1,2,2-tetrafluoroethane (R134), 1,1,1,2,2-pentafluoroethane (R125) and 1,1,1,2-tetrafluoroethane (R134a).

Among them, 1,1,1,2,2-pentafluoroethane (R125) is preferred.

### <Base Oil (A)>

The base oil (A) of the lubricating oil composition for refrigerators of the present invention comprises at least one selected from a polyoxyalkylene glycol, a polyvinyl ether, a copolymer of a poly(oxy)alkylene glycol or a monoether thereof and a polyvinyl ether, and a polyol ester.

The content of the at least one selected from a polyoxyalkylene glycol, a polyvinyl ether, a copolymer of a poly(oxy)alkylene glycol or a monoether thereof and a polyvinyl ether, and a polyol ester is preferably not less than 80% by mass, more preferably not less than 85% by mass, and even more preferably not less than 90% by mass based on the total amount of the lubricating oil composition for refrigerators, while it is preferably less than 98% by mass, more preferably not more than 97.9% by mass, and even more preferably not more than 97.5% by mass based on the total amount of the lubricating oil composition for refrigerators.

Thus, for example, the content is preferably 80% by mass to less than 98% by mass, more preferably 85% by mass to 97.9% by mass, and even more preferably 90% by mass to 97.5% by mass.

Further, the content of the at least one selected from a polyoxyalkylene glycol, a polyvinyl ether, a copolymer of a poly(oxy)alkylene glycol or a monoether thereof and a polyvinyl ether, and a polyol ester is preferably 80% by mass to 100% by mass, more preferably 85% by mass to 100% by mass, and even more preferably 90% by mass to 100% by mass based on the total amount of the base oil (A).

The base oil (A) contained in the lubricating oil composition for refrigerators of the present invention will now be described in greater detail.

### (Polyoxyalkylene Glycol)

Examples of the polyoxyalkylene glycol that can be used as the base oil (A) in the lubricating oil composition for refrigerators of the present invention include compounds represented by the following general formula (I).

R¹-[(OR²)ₘ-OR³]ₙ (I)

In the formula (I), R¹ represents a hydrogen atom, a monovalent hydrocarbon group having 1 to 10 carbon atoms, an acyl group having 2 to 10 carbon atoms, a divalent to hexavalent hydrocarbon group having 1 to 10 carbon atoms, or an oxygen-containing hydrocarbon group having 1 to 10 carbon atoms. R² represents an alkylene group having 2 to 4 carbon atoms, R³ represents a hydrogen atom, a hydrocarbon group having 1 to 10 carbon atoms, an acyl group having 2 to 10 carbon atoms, or an oxygen-containing hydrocarbon group having 1 to 10 carbon atoms. n represents an integer of 1 to 6, and m represents a number that makes the average value of m × n 6 to 80.

In the general formula (I), the monovalent hydrocarbon group having 1 to 10 carbon atoms in R¹ and R³ may be linear, branched or cyclic. The hydrocarbon group is preferably an alkyl group. Examples of the alkyl group include a methyl group, an ethyl group, an n-propyl group, an isopropyl group, various butyl groups, various pentyl groups, various hexyl groups, various heptyl groups, various octyl groups, various nonyl groups, various decyl groups, a cyclopentyl group, and a cyclohexyl group. The word "various" used with the above hydrocarbon group names refers to various isomers including n-, sec-, tert- and iso-; the same holds true for the description below. When the carbon number of the alkyl group is not more than 10, good compatibility with the refrigerant can be achieved. A preferred carbon number of the alkyl group is 1 to 6.

The hydrocarbon group moiety in the acyl group having 2 to 10 carbon atoms in R¹ and R³ may be linear, branched or cyclic. The hydrocarbon group moiety in the acyl group is preferably an alkyl group. Examples of the alkyl group include various alkyl groups having 1 to 9 carbon atoms among the alkyl groups listed above. When the carbon number of the acyl group is not more than 10, good compatibility with the refrigerant can be achieved. A preferred carbon number of the acyl group is 2 to 6.

When R¹ and R³ are each a hydrocarbon group or an acyl group, R¹ and R³ may be the same or different from each other.

When n is not less than 2, R³s in one molecule may be the same or different from each other.

When R¹ is a divalent to hexavalent hydrocarbon group having 1 to 10 carbon atoms, the hydrocarbon group may be linear or cyclic. The divalent hydrocarbon group is preferably an aliphatic hydrocarbon group. Examples of the aliphatic hydrocarbon group include an ethylene group, a propylene group, a butylene group, a pentylene group, a hexylene group, a heptylene group, an octylene group, a nonylene group, a decylene group, a cyclopentylene group, and a cyclohexylene group. Other examples may include residues of bisphenols, such as biphenol, bisphenol F and bisphenol A, from which a hydroxy group is removed. The trivalent to hexavalent hydrocarbon group is preferably an aliphatic hydrocarbon group. Examples of the aliphatic hydrocarbon group include residues of polyhydric alcohols, such as trimethylolpropane, glycerin, pentaerythritol, sorbitol, 1,2,3-trihydroxycyclohexane and 1,3,5-trihydroxycyclohexane, from which a hydroxy group is removed. When the carbon number of the aliphatic hydrocarbon group is not more than 10, good compatibility with the refrigerant can be achieved. A preferred carbon number is 2 to 6.

The oxygen-containing hydrocarbon group having 1 to 10 carbon atoms in R¹ and R³ may be a linear aliphatic hydrocarbon group and a cyclic aliphatic hydrocarbon group, each having an ether bond, and a tetrahydrofurfuryl group is especially preferred.

In one embodiment of the present invention, at least one of R¹ and R³ is preferably an alkyl group, in particular an alkyl group having 1 to 3 carbon atoms, and is especially preferably a methyl group from the viewpoint of viscosity characteristics. Further, for the same reason, both R¹ and R³ are preferably alkyl groups, especially preferably methyl groups.

R² in the general formula (I) is an alkylene group having 2 to 4 carbon atoms. Example of the oxyalkylene group of each repeating unit include an oxyethylene group, an oxypropylene group and an oxybutylene group. The oxyalkylene groups in one molecule may be of the same type, or two or more different types. At least an oxypropylene unit is preferably contained in one molecule especially in an amount of not less than 50 mol % in the oxyalkylene unit.
n in the general formula (I) is an integer of 1 to 6, and is determined by the valence of R¹. For example, when R¹ is an alkyl group or an acyl group, n is 1. When R¹ is a divalent, trivalent, tetravalent, pentavalent or hexavalent aliphatic hydrocarbon group, n is 2, 3, 4, 5 or 6. m represents a number that makes the average value of m × n 6 to 80. When the average value falls within the range, good compatibility with the refrigerant can be achieved.

Among the polyoxyalkylene glycols represented by the general formula (I), a polyoxypropylene glycol dimethyl ether represented by a general formula (I-a) (where x represents a number of 6 to 80) is preferred.

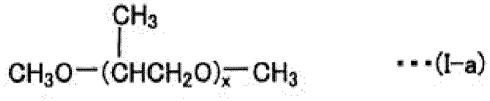

A polyoxyethylene polyoxypropylene glycol dimethyl ether represented by a general formula (I-b) (where a and b each represent a number of not less than 1 and, and their sum is 6 to 80) is also preferred. 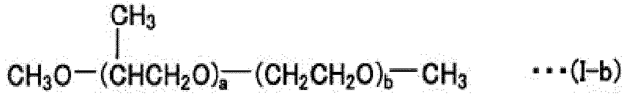 Any of those polyoxyalkylene glycols which are described in detail in JP 2-305893A can be used as the polyoxyalkylene glycol represented by the general formula (I).

In one embodiment of the present invention, either a single compound or a combination of two or more compounds can be used as the polyoxyalkylene glycol.

A polyoxyalkylene glycol derivative can be obtained, for example, by polymerizing an alkylene oxide having 2 to 4 carbon atoms, such as ethylene oxide or propylene oxide, using water or an alkali hydroxide as an initiator to give a polyoxyalkylene glycol having hydroxy groups at both ends of the molecule, and then etherifying or esterifying the hydroxy end groups using an alkyl halide or an acyl halide.

A polyoxyalkylene glycol derivative can also be obtained by polymerizing an alkylene oxide having 2 to 4 carbon atoms using a monohydric alcohol having 1 to 10 carbon atoms or an alkali metal salt thereof as an initiator to give a polyoxyalkylene glycol monoalkyl ether having an ether bond at one end of the molecule and having a hydroxy group at the other end, and then etherifying or esterifying the hydroxy group. In the case of producing a compound of the general formula (I) where n is not less than 2, a dihydric to hexahydric alcohol may be used as an initiator instead of the monohydric alcohol.

In the production of a polyoxyalkylene glycol derivative by such a method, if an alkyl halide or an acyl halide is used in an amount less than the stoichiometric amount in the etherification or esterification reaction, then hydroxy groups will remain unreacted, resulting in an increase in the hydroxyl number of the resulting product. Therefore, the molar ratio of the alkyl halide or the acyl halide to the polyoxyalkylene glycol is set in consideration of the stoichiometric amount. The polymerization and the etherification or esterification may be performed in an inert gas atmosphere. This can prevent discoloration.

### (Polyvinyl Ether)

Examples of the polyvinyl ether, which can be used as the base oil (A) contained in the lubricating oil composition for refrigerators of the present invention, include polyvinyl ether compounds having a constituent unit represented by the general formula (II):

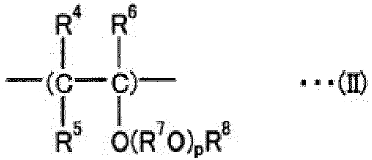

In the above general formula (II), R⁴, R⁵ and R⁶, which may be same or different from each other, each represent a hydrogen atom or a hydrocarbon group having 1 to 8 carbon atoms. Specific examples of the hydrocarbon group include alkyl groups such as a methyl group, an ethyl group, an n-propyl group, an isopropyl group, an n-butyl group, an isobutyl group, a sec-butyl group, a tert-butyl group, various pentyl groups, various hexyl groups, various heptyl groups and various octyl groups; cycloalkyl groups such as a cyclopentyl group, a cyclohexyl group, various methylcyclohexyl groups, various ethylcyclohexyl groups and various dimethylcyclohexyl groups; aryl groups such as a phenyl group, various methylphenyl groups, various ethylphenyl groups and various dimethylphenyl groups; and arylalkyl group such as a benzyl group, various phenylethyl groups and various methylbenzyl groups. It is especially preferred that R⁴, R⁵ and R⁶ each be a hydrogen atom or a hydrocarbon group having not more than 3 carbon atoms.

On the other hand, R⁷ in the general formula (II) represents a divalent hydrocarbon group having 2 to 10 carbon atoms. Specific examples of the divalent hydrocarbon group having 2 to 10 carbon atoms include divalent aliphatic hydrocarbon groups such as an ethylene group, a phenylethylene group, a 1,2-propylene group, a 2-phenyl-1,2-propylene group, a 1,3-propylene group, various butylene groups, various pentylene groups, various hexylene groups, various heptylene groups, various octylene groups, various nonylene groups, and various decylene groups; divalent alicyclic hydrocarbon groups having two binding sites in an alicyclic hydrocarbon such as cyclohexane, methylcyclohexane, ethylcyclohexane, dimethylcyclohexane, or propylcyclohexane; divalent aromatic hydrocarbon groups such as various phenylene groups, various methylphenylene groups, various ethylphenylene groups, various dimethylphenylene groups, and various naphthylene groups; alkylaromatic hydrocarbon groups having a monovalent binding site in each of the alkyl group moiety and the aromatic moiety of an alkylaromatic hydrocarbon such as toluene or ethylbenzene; and alkylaromatic hydrocarbon groups having a binding site in the alkyl group moiety of a polyalkylaromatic hydrocarbon such as xylene or diethylbenzene. Among them, an aliphatic hydrocarbon group having 2 to 4 carbon atoms is especially preferred. The R⁷Os may be the same or different from each other.

p in the general formula (II) represents the number of repeating units, whose average value is in the range of 0 to 10, preferably in the range of 0 to 5.

R⁸ in the general formula (II) represents a hydrocarbon group having 1 to 10 carbon atoms. Specific examples of the hydrocarbon group include alkyl groups such as a methyl group, an ethyl group, an n-propyl group, an isopropyl group, an n-butyl group, an isobutyl group, a sec-butyl group, a tert-butyl group, various pentyl groups, various hexyl groups, various heptyl groups, various octyl groups, various nonyl groups and various decyl groups; cycloalkyl groups such as a cyclopentyl group, a cyclohexyl group, various methylcyclohexyl groups, various ethylcyclohexyl group, various propylcyclohexyl groups and various dimethylcyclohexyl groups; aryl groups such as a phenyl group, various methylphenyl groups, various ethylphenyl groups, various dimethylphenyl groups, various propylphenyl groups, various trimethylphenyl groups, various butylphenyl groups and various naphthyl groups; and arylalkyl groups such as a benzyl group, various phenylethyl groups, various methylbenzyl groups, various phenylpropyl groups and various phenylbutyl groups. Among them, a hydrocarbon group having not less than 8 carbon atoms is preferred. When p is 0, an alkyl group having 1 to 6 carbon atoms is especially preferred, and when p is not less than 1, an alkyl group having 1 to 4 carbon atoms is especially preferred.

The polyvinyl ether compound can be produced by polymerizing a corresponding vinyl ether monomer. Usable vinyl ether monomers are represented by a general formula (III) (where R⁴, R⁵, R⁶, R⁷, R⁸ and p are the same as those described above).

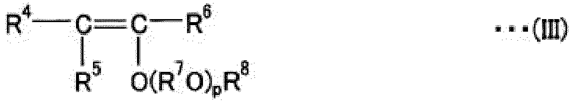

Examples of the vinyl ether monomer, corresponding to the polyvinyl ether compound, include vinyl methyl ether, vinyl ethyl ether, vinyl n-propyl ether, vinyl isopropyl ether, vinyl n-butyl ether, vinyl isobutyl ether, vinyl sec-butyl ether, vinyl tert-butyl ether, vinyl n-pentyl ether, vinyl n-hexyl ether, vinyl 2-methoxyethyl ether, vinyl 2-ethoxyethyl ether, vinyl 2-methoxy-1-methylethyl ether, vinyl 2-methoxypropyl ether, vinyl 3,6-dioxaheptyl ether, vinyl 3,6,9-trioxadecyl ether, vinyl 1,4-dimethyl-3,6-dioxaheptyl ether, vinyl 1,4,7-trimethyl-3,6,9-trioxadecyl ether, vinyl 2,6-dioxa-4-heptyl ether, vinyl 2,6,9-trioxa-4-decyl ether, 1-methoxypropene, 1-ethoxypropene, 1-n-propoxypropene, 1-isopropoxypropene, 1-n-butoxypropene, 1-isobutoxypropene, 1-sec-butoxypropene, 1-tert-butoxypropene, 2-methoxypropene, 2-ethoxypropene, 2-n-propoxypropene, 2-isopropoxypropene, 2-n-butoxypropene, 2-isobutoxypropene, 2-sec-butoxypropene, 2-tert-butoxypropene, 1-methoxy-1-butene, 1-ethoxy-1-butene, 1-n-propoxy-1-butene, 1-isopropoxy-1-butene, 1-n-butoxy-1-butene, 1-isobutoxy-1-butene, 1-sec-butoxy-1-butene, 1-tert-butoxy-1-butene, 2-methoxy-1-butene, 2-ethoxy-1-butene, 2-n-propoxy-1-butene, 2-isopropoxy-1-butene, 2-n-butoxy-1-butene, 2-isobutoxy-1-butene, 2-sec-butoxy-1-butene, 2-tert-butoxy-1-butene, 2-methoxy-2-butene, 2-ethoxy-2-butene, 2-n-propoxy-2-butene, 2-isopropoxy-2-butene, 2-n-butoxy-2-butene, 2-isobutoxy-2-butene, 2-sec-butoxy-2-butene, and 2-tert-butoxy-2-butene. These vinyl ether monomers can be produced by any known method.

In the polyvinyl ether compound having a constituent unit represented by the general formula (II), which is to be used as the base oil (A) contained in the lubricating oil composition for refrigerators of the present invention, its terminal moiety(ies) can be converted into a desired structure by a method as described herein or by a known method. Examples of converted groups include a saturated hydrocarbon group, an ether group, an alcohol group, a ketone group, an amide group, and a nitrile group.

The polyvinyl ether compound having a constituent unit represented by the general formula (II), which is to be used as the base oil (A) contained in the lubricating oil composition for refrigerators of the present invention, preferably has one of the following terminal structures.
(1) One terminal has a structure represented by the general formula (IV): 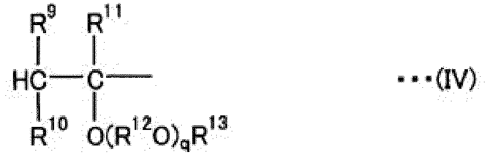 wherein R⁹, R¹⁰ and R¹¹, which may be the same or different from each other, each represent a hydrogen atom or a hydrocarbon group having 1 to 8 carbon atoms, R¹² represents a divalent hydrocarbon group having 2 to 10 carbon atoms, R¹³ represents a hydrocarbon group having 1 to 10 carbon atoms, q represents a number of 0 to 10 as an average value and, when there is a plurality of R¹²Os, the R¹²Os may be the same or different from each other,
   and the remaining terminal has a structure represented by the general formula (V): 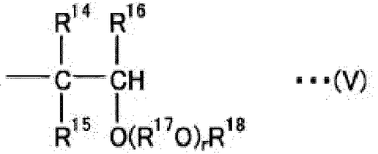 wherein R¹⁴, R¹⁵ and R¹⁶, which may be the same or different from each other, each represent a hydrogen atom or a hydrocarbon group having 1 to 8 carbon atoms, R¹⁷ represents a divalent hydrocarbon group having 2 to 10 carbon atoms, R¹⁸ represents a hydrocarbon group having 1 to 10 carbon atoms, r represents a number of 0 to 10 as an average value and, when there is a plurality of R¹⁷Os, the R¹⁷Os may be the same or different from each other.
(2) One terminal has a structure represented by the above-described general formula (IV), and the remaining terminal has a structure represented by the general formula (VI): 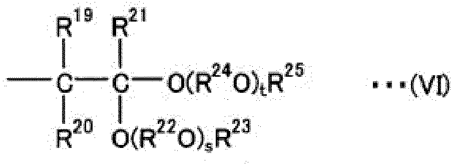 wherein R¹⁹, R²⁰ and R²¹, which may be the same or different from each other, each represent a hydrogen atom or a hydrocarbon group having 1 to 8 carbon atoms, R²² and R²⁴, which may be the same or different from each other, each represents a divalent hydrocarbon group having 2 to 10 carbon atoms, R²³ and R²⁵, which may be the same or different from each other, each represent a hydrocarbon group having 1 to 10 carbon atoms, and s and t, which may be the same or different from each other, each represent a number of 0 to 10 as an average value. When there is a plurality of R²²Os, the R²²Os may be the same or different from each other and, when there is a plurality of R²⁴Os, the R²⁴Os may be the same or different from each other.
(3) One terminal has a structure represented by the general formula (IV), and the remaining terminal has an olefinic unsaturated bond.
(4) One terminal has a structure represented by the general formula (IV), and the remaining terminal has a structure represented by the general formula (VII): 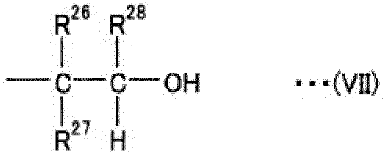 wherein R²⁶, R²⁷ and R²⁸, which may be the same or different from each other, each represent a hydrogen atom or a hydrocarbon group having 1 to 8 carbon atoms.

It is possible to use a mixture of two or more polyvinyl ether compounds selected from the above-described compounds having any one of the terminal structures (1) to (4). Preferred examples of such a mixture include a mixture of the polyvinyl ether compounds (1) and (4), and a mixture of the polyvinyl ether compounds (2) and (3).

In one embodiment of the present invention, the polyvinyl ether compound having a constituent unit represented by the general formula (II) is preferably a polyethyl vinyl ether, where R⁴, R⁵ and R⁶ are all hydrogen atoms, p is 0 and R⁸ is an ethyl group, from the viewpoint of enhancing solubility in the refrigerant and thermal stability.

From the same viewpoint, it is also preferred to use, as the polyvinyl ether compound having a constituent unit represented by the general formula (II), a copolymer of a polyethyl vinyl ether where R⁴, R⁵ and R⁶ are all hydrogen atoms, p is 0 and R⁸ is an ethyl group, and a polyisobutyl vinyl ether where R⁴, R⁵ and R⁶ are all hydrogen atoms, p is 0 and R⁸ is an isobutyl group. In the copolymer, the molar content ratio between the ethyl vinyl ether constituent unit and the isobutyl vinyl ether constituent unit [(ethyl vinyl ether constituent unit)/(isobutyl vinyl ether constituent unit)] is preferably 50/50 to 99/1, more preferably 70/30 to 99/1, even more preferably 80/20 to 95/5, and still more preferably 85/15 to 95/5.

Preferably, a raw material, an initiator and reaction conditions are selected so as to produce a polyvinyl ether compound having a desired range of kinematic viscosity. It is also possible to mix a polymer, having a kinematic viscosity outside the desired range, with a polymer having a different kinematic viscosity in such a manner as to prepare a mixture having a kinematic viscosity in the desired range.

In one embodiment of the present invention, an unreacted raw material is preferably removed in a purification step in the production of the polyvinyl ether compound from the viewpoint of easier control of a hydroxy number.

In the present invention, either a single compound or a combination of two or more compounds may be used as the polyvinyl ether compound.

### (Copolymer of poly(oxy)alkylene glycol or monoether thereof and polyvinyl ether)

Examples of the copolymer of a poly(oxy)alkylene glycol or a monoether thereof and a polyvinyl ether, which can be used as the base oil (A) contained in the lubricating oil composition for refrigerators of the present invention, include copolymers represented by a general formula (VIII) and copolymers represented by a general formula (IX) (hereinafter referred to as polyvinyl ether copolymers I and polyvinyl ether copolymers II, respectively).

Poly(oxy)alkylene glycol herein refers to both polyalkylene glycol and polyoxyalkylene glycol.

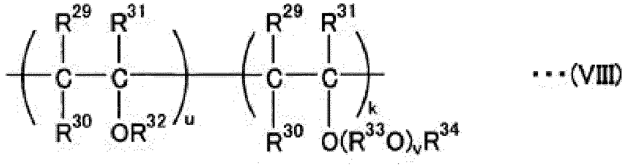

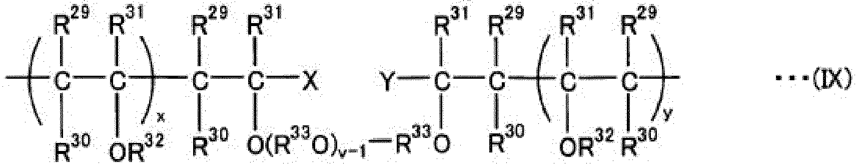

In the general formula (VIII), R²⁹, R³⁰ and R³¹, which may be the same or different from each other, each represents a hydrogen atom or a hydrocarbon group having 1 to 8 carbon group, R³³ represents a divalent hydrocarbon group having 2 to 4 carbon atoms, R³⁴ represents an aliphatic hydrocarbon group or alicyclic hydrocarbon group having 1 to 20 carbon group, an aromatic hydrocarbon group having 1 to 20 carbon atoms and optionally having a substituent, an acyl group having 2 to 20 carbon atoms, or an oxygen-containing hydrocarbon group having 2 to 50 carbon atoms, and R³² represents a hydrocarbon group having 1 to 10 carbon atoms. When there is a plurality of R³⁴s, R³³s and/or R³²s, they may be the same or different from each other.

Specific examples of the hydrocarbon group having 1 to 8 carbon atoms of R²⁹ to R³¹ include alkyl groups such as a methyl group, an ethyl group, an n-propyl group, an isopropyl group, an n-butyl group, an isobutyl group, a sec-butyl group, a tert-butyl group, various pentyl groups, various hexyl groups, various heptyl groups, and various octyl groups; aryl groups such as a cyclopentyl group, a cyclohexyl group, various methylcyclohexyl groups, various ethylcyclohexyl groups, various dimethylcyclohexyl groups, and various dimethylphenyl groups; and arylalkyl groups such as a benzyl group, various phenylethyl groups, and various methylbenzyl groups. It is especially preferred that R²⁹, R³⁰ and R³¹ each be a hydrogen atom.

On the other hand, specific examples of the divalent hydrocarbon group having 2 to 4 carbon atoms, represented by R³³, include divalent alkylene groups such as a methylene group, an ethylene group, a propylene group, a trimethylene group, and various butylene groups.

v in the general formula (VIII) represents the number of repeating units R³³O, whose average value is in the range of 1 to 50, preferably in the range of 1 to 20, more preferably in the range of 1 to 10, and even more preferably in the range of 1 to 5. When there is a plurality of R³³Os, the R³³Os may be the same or different from each other.

k represents a number of 1 to 50, preferably 1 to 10, more preferably 1 to 2, and especially preferably 1. u represents a number of 0 to 50, preferably 2 to 25, and more preferably 5 to 15. When there are a plurality of "k"s and a plurality of "u"s, the respective units may be distributed either randomly or in block form.

R³⁴ in the general formula (VIII) is preferably an alkyl group having 1 to 10 carbon atoms, an acyl group having 2 to 10 carbon atoms, or an oxygen-containing hydrocarbon group having 2 to 50 carbon atoms.

Specific examples of the alkyl group having 1 to 10 carbon atoms include a methyl group, an ethyl group, an n-propyl group, an isopropyl group, a n-butyl group, an isobutyl group, a sec-butyl group, a tert-butyl group, various pentyl groups, various hexyl groups, various heptyl groups, various octyl groups, various nonyl groups, various decyl groups, a cyclopentyl group, a cyclohexyl group, various methylcyclohexyl groups, various ethylcyclohexyl groups, various propylcyclohexyl groups, and various dimethylcyclohexyl groups.

Specific examples of the acyl group having 2 to 10 carbon atoms include an acetyl group, a propionyl group, a butyryl group, an isobutyryl group, a valeryl group, an isovaleryl group, a pivaloyl group, a benzoyl group, and a toluoyl group.

Specific examples of the oxygen-containing hydrocarbon group having 2 to 50 carbon atoms include a methoxymethyl group, a methoxyethyl group, a methoxypropyl group, a 1,1-bismethoxypropyl group, a 1,2-bismethoxypropyl group, an ethoxypropyl group, a (2-methoxyethoxy)propyl group, and a (1-methyl-2-methoxy)propyl group.

Specific examples of the hydrocarbon group having 1 to 10 carbon atoms, represented by R³² in the general formula (VIII), include alkyl groups such as a methyl group, an ethyl group, an n-propyl group, an isopropyl group, an n-butyl group, an isobutyl group, various pentyl groups, various hexyl groups, various heptyl groups, various octyl groups, various nonyl groups, and various decyl groups; cycloalkyl groups such as a cyclopentyl group, a cyclohexyl group, various methylcyclohexyl groups, various ethylcyclohexyl groups, various propylcyclohexyl groups, and various dimethylcyclohexyl groups; aryl groups such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups such as a benzyl group, various phenylethyl groups, various methylbenzyl groups, various phenylpropyl groups, and various phenylbutyl groups.

R²⁹ to R³¹, R³⁴, R³³, v and R²⁹ to R³² may each be the same or different between constituent units.

The polyvinyl ether copolymer I having a constituent unit represented by the general formula (VIII), because of its copolymer form, has the effect of enhancing lubricating properties, insulating properties and hygroscopic properties while satisfying compatibility. Such properties of the base oil can be enhanced to the intended level by selecting the types of monomers as a raw material, the type of an initiator and the ratio between the comonomers. the above-mentioned performance of an oily agent can be made to reach the intended level. This makes it possible to obtain a base oil that can meet requirements for lubricating properties, compatibility, etc. which vary depending on the type of a compressor, the material of a lubricating portion, the refrigeration capacity, the type of the refrigerant, etc. in a refrigerating system or an air-conditioning system.

On the other hand, in the polyvinyl ether copolymer II represented by the general formula (IX), R²⁹ to R³², R³³ and v are the same as those described above. When there is a plurality of R³³s and/or a plurality of R³²s, they may be the same or different from each other. x and y each represent a number of 1 to 50. When there are a plurality of "x"s and a plurality of "y"s, the respective units may be distributed either randomly or in block form. X and Y each independently represent a hydrogen atom, a hydroxy group, or a hydrocarbon group having 1 to 20 carbon atoms.

There is no particular limitation on a method for producing the polyvinyl ether copolymer I represented by the general formula (VIII); any method capable of producing the copolymer can be employed. For example, the copolymer can be produced by any of the following production methods 1 to 3.

### (Production Method 1 for Polyvinyl Ether Copolymer I)

In the production method 1, a poly(oxy)alkylene glycol represented by the general formula (X):

R³⁴-(OR³³)ᵥ-OH (X)

(wherein R³³, R³⁴ and v are the same as those described above) is used as an initiator, and a vinyl ether compound represented by the general formula (XI): 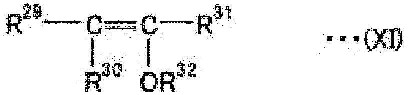 (wherein R²⁹ to R³² are the same as those described above) is polymerized to give a polyvinyl ether copolymer I.

Examples of the poly(oxy)alkylene glycol compound represented by the general formula (X) include (oxy)alkylene glycol monoethers such as ethylene glycol monomethyl ether, diethylene glycol monomethyl ether, triethylene glycol monomethyl ether, propylene glycol monomethyl ether, dipropylene glycol monomethyl ether, and tripropylene glycol monomethyl ether.

Examples of the vinyl ether compound represented by the general formula (XI) include vinyl ethers such as vinyl methyl ether, vinyl ethyl ether, vinyl n-propyl ether, vinyl isopropyl ether, vinyl n-butyl ether, vinyl isobutyl ether, vinyl sec-butyl ether, vinyl tert-butyl ether, vinyl n-pentyl ether, and vinyl n-hexyl ether; propenes such as 1-methoxypropene, 1-ethoxypropene, 1-n-propoxypropene, 1-isopropoxypropene, 1-n-butoxypropene, 1-isobutoxypropene, 1-sec-butoxypropene, 1-tert-butoxypropene, 2-methoxypropene, 2-ethoxypropene, 2-n-propoxypropene, 2-isopropoxypropene, 2-n-butoxypropene, 2-isobutoxypropene, 2-sec-butoxypropene, and 2-tert-butoxypropene; and butenes such as 1-methoxy-1-butene, 1-ethoxy-1-butene, 1-n-propoxy-1-butene, 1-isopropoxy-1-butene, 1-n-butoxy-1-butene, 1-isobutoxy-1-butene, 1-sec-butoxy-1-butene, 1-tert-butoxy-1-butene, 2-methoxy-1-butene, 2-ethoxy-1-butene, 2-n-propoxy-1-butene, 2-isopropoxy-1-butene, 2-n-butoxy-1-butene, 2-isobutoxy-1-butene, 2-sec-butoxy-1-butene, 2-tert-butoxy-1-butene, 2-methoxy-2-butene, 2-ethoxy-2-butene, 2-n-propoxy-2-butene, 2-isopropoxy-2-butene, 2-n-butoxy-2-butene, and 2-tert-butoxy-2-butene. These vinyl ether monomers can be produced by any known method.

### (Production Method 2 for Polyvinyl Ether Copolymer I)

In the production method 2, an acetal compound represented by the general formula (XII): 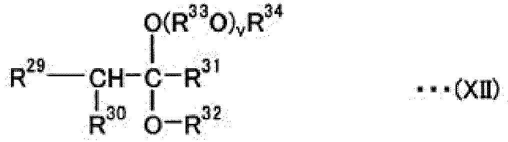 (wherein R²⁹ to R³⁴ and v are the same as those described above) is used as an initiator, and a vinyl ether compound represented by the above-described general formula (XI) is polymerized to give a polyvinyl ether copolymer I.

Examples of the acetal compound represented by the general formula (XII) include acetaldehyde methyl(2-methoxyethyl) acetal, acetaldehyde ethyl(2-methoxyethyl) acetal, acetaldehyde methyl(2-methoxy-1-methylethyl) acetal, acetaldehyde ethyl(2-methoxy-1-methylethyl) acetal, acetaldehyde methyl[2-(2-methoxyethoxy)ethyl] acetal, acetaldehyde ethyl[2-(2-methoxyethoxy)ethyl] acetal, acetaldehyde methyl[2-(2-methoxyethoxy)-1-methylethyl] acetal, and acetaldehyde ethyl[2-(2-methoxyethoxy)-1-methylethyl] acetal.

The acetal compound represented by the general formula (XII) can also be produced, for example, by reacting one molecule of a poly(oxy)alkylene glycol compound represented by the general formula (X) and one molecule of a vinyl ether compound represented by the general formula (XI). The resulting acetal compound can be used, as it is or after its isolation, as an initiator.

### (Production Method 3 for Polyvinyl Ether Copolymer I)

In the production method 3, an acetal compound represented by the general formula (XIII): 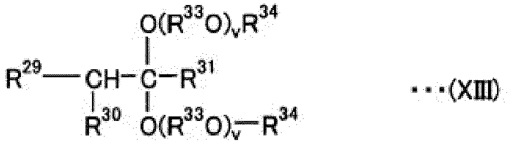 (wherein R²⁹ to ³¹, R³³, R³⁴ and v are the same as those described above) is used as an initiator, and a vinyl ether compound represented by the above-described general formula (XI) is polymerized to give a polyvinyl ether copolymer I.

Examples of the acetal compound represented by the general formula (XIII) include acetaldehyde di(2-methoxyethyl) acetal, acetaldehyde di(2-methoxy-1-methylethyl) acetal, acetaldehyde di[2-(2-methoxyethoxy)ethyl] acetal, and acetaldehyde di[2-(2-methoxyethoxy)-1-methylethyl] acetal.

The acetal compound represented by the general formula (XIII) can also be produced, for example, by reacting one molecule of a poly(oxy)alkylene glycol compound represented by the general formula (X) and one molecule of a vinyl ether compound represented by the general formula (XIV): 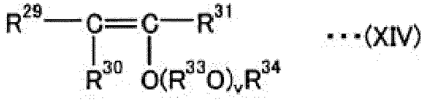 wherein R²⁹ to R³¹, R³³, R³⁴ and v are the same as those described above. The resulting acetal compound can be used, as it is or after its isolation, as an initiator.

The vinyl ether copolymer I represented by the general formula (VIII) can be one in which one terminal has a structure represented by the general formula (XV) or (XVI): 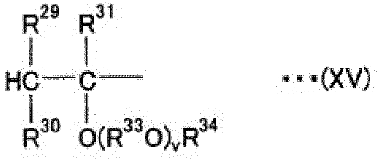 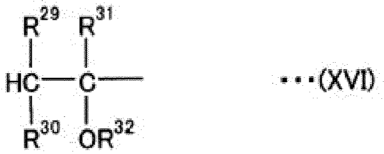 wherein R²⁹ to R³⁴ and v are the same as those described above, and the remaining terminal has a structure represented by the general formula (XVII) or (XVIII): 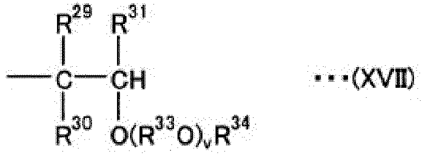 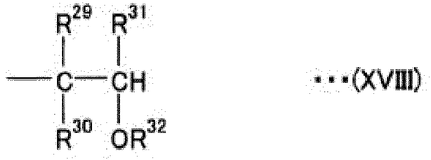 wherein R²⁹ to R³⁴ and v are the same as those described above.

Among such polyvinyl ether copolymers I, the following ones are especially preferred as the base oil (A) contained in the lubricating oil composition for refrigerators of the present invention.
(1) A copolymer in which one terminal has a structure represented by the general formula (XV) or (XVI), and the remaining terminal has a structure represented by the general formula (XVII) or (XVIII). R²⁹, R³⁰ and R³¹ in the general formula (VIII) are all hydrogen atoms, v is a number of 1 to 4, R³³ is a divalent hydrocarbon group having 2 to 4 carbon atoms, R³⁴ is an alkyl group having 1 to 10 carbon atoms, and R³² is a hydrocarbon group having 1 to 10 carbon atoms.
(2) A copolymer in which one terminal has a structure represented by the general formula (XV), and the remaining terminal has a structure represented by the general formula (XVIII). R²⁹, R³⁰ and R³¹ in the general formula (VIII) are all hydrogen atoms, v is a number of 1 to 4, R³³ is a divalent hydrocarbon group having 2 to 4 carbon atoms, R³⁴ is an alkyl group having 1 to 10 carbon atoms, and R³² is a hydrocarbon group having 1 to 10 carbon atoms.
(3) A copolymer in which one terminal has a structure represented by the general formula (XVI), and the remaining terminal has a structure represented by the general formula (XVII). R²⁹, R³⁰ and R³¹ in the general formula (VIII) are all hydrogen atoms, v is a number of 1 to 4, R³³ is a divalent hydrocarbon group having 2 to 4 carbon atoms, R³⁴ is an alkyl group having 1 to 10 carbon atoms, and R³² is a hydrocarbon group having 1 to 10 carbon atoms.

On the other hand, there is no particular limitation on a method for producing the polyvinyl ether copolymer II represented by the general formula (IX); any method capable of producing the copolymer can be employed. For example, the copolymer can be produced efficiently by the following method.

### (Production Method for Polyvinyl Ether Copolymer II)

The polyvinyl ether copolymer II represented by the general formula (IX) can be produced by polymerizing a vinyl ether compound represented by the general formula (XI) using, as an initiator, a poly(oxy)alkylene glycol represented by the general formula (XIX):

HO-(R³³O)ᵥ-H (XIX)

wherein R³³ and v are the same as those described above.

Examples of the poly(oxy)alkylene glycol represented by the general formula (XIX) include ethylene glycol, diethylene glycol, triethylene glycol, polyethylene glycol, propylene glycol, dipropylene glycol, and polypropylene glycol.

In the present invention, either a single copolymer or a combination of two or more copolymers may be used as the copolymer of a poly(oxy)alkylene glycol or a monoether thereof and a polyvinyl ether.

### (Polyol Ester)

An ester of a diol or a polyol having about 3 to 20 hydroxy groups and a fatty acid having about 1 to 24 carbon atoms is preferably used as the polyol ester which can be used as the base oil (A) contained in the lubricating oil composition for refrigerators of the present invention.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include polyhydric alcohols, such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerin (e.g., dimer to icosamer of glycerin), 1,3,5-pentanetriol, sorbitol, sorbitan, a sorbitol-glycerin condensate, adonitol, arabitol, xylitol, and mannitol; saccharides, such as xylose, arabinose, ribose, rhamnose, glucose, fructose, galactose, mannose, sorbose, cellobiose, maltose, isomaltose, trehalose, sucrose, raffinose, gentianose, and melenzitose; and partially etherified derivatives and methyl glucosides thereof. Among them, hindered alcohols such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol) are preferred.

There is no particular limitation on the carbon number of the fatty acid; however, fatty acids having 1 to 24 carbon atoms are generally used. Among fatty acids having 1 to 24 carbon atoms, a fatty acid having at least 3 carbon atoms is preferred, a fatty acid having at least 4 carbon atoms is more preferred, a fatty acid having at least 5 carbon atoms is even more preferred, and a fatty acid having at least 10 carbon atoms is most preferred from the viewpoint of lubricating properties. A fatty acid having not more than 18 carbon atoms is preferred, a fatty acid having not more than 12 carbon atoms is more preferred, and a fatty acid having not more than 9 carbon atoms is even more preferred from the viewpoint of compatibility with the refrigerant.

The fatty acid may be either a linear fatty acid or a branched fatty acid. A linear fatty acid is preferred from the viewpoint of lubricating properties. A branched fatty acid is preferred from the viewpoint of hydrolysis stability. Further, the fatty acid may be either a saturated fatty acid or an unsaturated fatty acid.

Specific examples of the fatty acid include pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, and oleic acid, which are linear or branched; and a so-called neo acid in which the α-carbon atom is quaternary. More specifically, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid, 2-ethylpentanoic acid, 2-ethylhexanoic acid, and 3,5,5-trimethylhexanoic acid are preferred.

The polyol ester may be a partial ester in which not all the hydroxy groups of the polyol have been esterified, and some hydroxy groups remain, or a complete ester in which all the hydroxy groups have been esterified, and may also be a mixture of a partial ester and a complete ester, and is preferably a complete ester.

Among such polyol esters, an ester of a hindered alcohol, such as neopentyl glycol, trimethylolethane, trimethylolpropane, trimethylolbutane, di-(trimethylolpropane), tri-(trimethylolpropane), pentaerythritol, di-(pentaerythritol) or tri-(pentaerythritol), is preferred, and an ester of neopentyl glycol, trimethylolethane, trimethylolpropane, trimethylolbutane or pentaerythritol is more preferred from the viewpoint of excellent hydrolysis stability. An ester of pentaerythritol is most preferred because of its especially excellent compatibility with the refrigerant and hydrolysis stability.

Preferred examples of the polyol ester include a diester of neopentyl glycol with at least one fatty acid selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolethane with at least one fatty acid selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolpropane with at least one fatty acid selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolbutane with at least one fatty acid selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; and a tetraester of pentaerythritol with at least one fatty acid selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid.

An ester with two or more fatty acids may be a mixture of two or more esters, each formed from a polyol and one fatty acid, or an ester of a polyol with a mixed fatty acid of two or more fatty acids. In particular, an ester of a polyol with a mixed fatty acid is excellent in low-temperature characteristics and compatibility with the refrigerant.

Among polyol esters, an ester of a polyol with a mixed fatty acid of two or more fatty acids is preferred from the viewpoint of enhancing low-temperature characteristics and the viewpoint of compatibility with the refrigerant. An ester of a polyol having 2 to 20 hydroxy groups with a mixed fatty acid of two or more fatty acids each having 3 to 20 carbon atoms is more preferred, an ester of a polyol having 2 to 10 hydroxy groups with a mixed fatty acid of two or more fatty acids each having 5 to 15 carbon atoms is even more preferred, and an ester of a polyol having 2 to 6 hydroxy groups with a mixed fatty acid of two or more fatty acids each having 7 to 12 carbon atoms is still more preferred.

In the production of the polyol ester compound, the esterification reaction may be performed in an inert gas atmosphere. This can prevent discoloration. With respect to the ratio between a polyhydric alcohol and an aliphatic monocarboxylic acid which are to be reacted, if the amount of the aliphatic monocarboxylic acid is less than the stoichiometric amount, hydroxy groups will remain unreacted, resulting in an increase in the hydroxyl number of the resulting product. On the other hand, if the amount of the aliphatic monocarboxylic acid is more than the stoichiometric amount, carboxy groups will remain unreacted, resulting in an increase in the acid number of the resulting product and a decrease in the pH of the extracted water. Accordingly, the molar ratio between the polyhydric alcohol and the aliphatic monocarboxylic acid is preferably optimized. Further, the treatment is preferably performed in such a manner as to minimize the amount of a remaining esterification catalyst (ash).

### <Physical Properties of Base Oil (A)>

### (Hydroxyl Number)

The hydroxyl number of the base oil (A) contained in the lubricating oil composition for refrigerators according to an embodiment of the present invention is preferably not more than 15 mgKOH/g, more preferably not more than 10 mgKOH/g, even more preferably not more than 5.0 mgKOH/g, and still more preferably not more than 3.0 mgKOH/g from the viewpoint of enhancing the thermal stability of the lubricating oil composition for refrigerators when used with the refrigerant comprising difluoromethane (R32), trifluoroiodomethane (CF₃I), and at least one compound (α) selected from saturated fluorinated hydrocarbon compounds (HFC) other than difluoromethane (R32).

The hydroxyl number of the base oil (A) contained in the lubricating oil composition for refrigerators according to an embodiment of the present invention is generally not less than 0.1 mgKOH/g.

The hydroxyl number is herein measured by the method specified by JIS K 0070:1992.

### (Kinematic Viscosity at 100°C, Viscosity Index)

The kinematic viscosity at 100°C (hereinafter also referred to as "100°C kinematic viscosity") of the base oil (A) contained in the lubricating oil composition for refrigerators according to an embodiment of the present invention is preferably not less than 1 mm²/s and not more than 50 mm²/s, more preferably not less than 3 mm²/s and not more than 40 mm²/s, and even more preferably not less than 4 mm²/s and not more than 30 mm²/s. When the kinematic viscosity is not less than 1 mm²/s, good lubricating performance (load resistance) and good sealing properties can be achieved. When the kinematic viscosity is not more than 50 mm²/s, the composition is excellent in compatibility with the refrigerant and has good energy saving performance.

The viscosity index of the base oil (A) contained in the lubricating oil composition for refrigerators according to an embodiment of the present invention is preferably not less than 60, more preferably not less than 80.

When the viscosity index is not less than 60, a reduction in the high-temperature kinematic viscosity can be prevented.

The 100°C kinematic viscosity and the viscosity index of the base oil (A) are herein measured and calculated according to JIS K 2283:2000.

### (Number-Average Molecular Weight)

The number-average molecular weight of the base oil (A) contained in the lubricating oil composition for refrigerators according to an embodiment of the present invention is preferably not less than 500 and not more than 3000, more preferably not less than 600 and not more than 2500, even more preferably not less than 600 and not more than 2000, and still more preferably not less than 600 and not more than 1500. When the number-average molecular weight of the base oil (A) falls within the above range, the lubricating oil composition for refrigerators can achieve the intended performance.

The number-average molecular weight of the base oil (A) is herein measured by the method described in Examples below.

### <Aliphatic Epoxy Compound (B)>

The lubricating oil composition for refrigerators of the present invention contains the aliphatic epoxy compound (B) in an amount of more than 2.0% by mass based on the total amount of the lubricating oil composition for refrigerators. If the content of the aliphatic epoxy compound (B) is not more than 2.0% by mass, the thermal stability of the lubricating oil composition for refrigerators cannot be ensured.

The content of the aliphatic epoxy compound (B) is preferably 2.1 to 20.0% by mass, 2.1 to 10.0% by mass, 2.1 to 8.0% by mass, or 2.1 to 5.0% by mass, more preferably 2.1 to 4.5% by mass, and even more preferably 2.5 to 4.0% by mass based on the total amount of the lubricating oil composition for refrigerators.

The aliphatic epoxy compound (B) is a compound having, in one molecule, an aliphatic hydrocarbon group and at least one epoxy group. Examples may include a glycidyl ether compound such as an alkyl glycidyl ether or an alkylene glycol glycidyl ether, an alkyl epoxide, and an epoxidized soybean oil. Either a single compound or a combination of two or more compounds may be used as the aliphatic epoxy compound (B). Among them, a glycidyl ether compound is preferred. The glycidyl ether compound is exemplified by a glycidyl ether generally having 4 to 30, preferably 4 to 24, more preferably 5 to 20 carbon atoms and derived from a linear, branched or cyclic, saturated or unsaturated, aliphatic monohydric or polyhydric alcohol. In the case of a glycidyl ether derived from an aliphatic polyhydric alcohol, all the hydroxy groups are preferably glycidyl etherified from the viewpoint of preventing an increase in the hydroxyl number for the stability of the lubricating oil composition.

In particular, a glycidyl ether compound having 5 to 20 carbon atoms and derived from a linear, branched or cyclic, saturated aliphatic monohydric alcohol is preferred, and a glycidyl ether compound having 5 to 20 carbon atoms and derived from a linear or branched saturated aliphatic monohydric alcohol is more preferred.

The number of carbon atoms of a glycidyl ether compound herein refers to the number of carbon atoms of the entire glycidyl ether compound, including the number of carbon atoms (which is 3) of the glycidyl ether group.

The preferred glycidyl ether compound is exemplified by a glycidyl ether compound represented by the following general formula (b1):

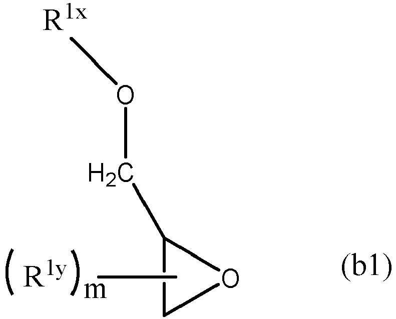

In the general formula (b1), R^{1x} represents a saturated aliphatic hydrocarbon group having 1 to 27 carbon atoms. The number of carbon atoms of the saturated aliphatic hydrocarbon group is preferably 4 to 24, more preferably 6 to 20, and even more preferably 6 to 16 from the viewpoint of better achieving the effect of the present invention.

R^{1y} represents a saturated aliphatic hydrocarbon group having 1 to 30 carbon atoms.

m represents an integer of 0 to 3 and, from the viewpoint of better achieving the effect of the present invention, is preferably 0 to 2, more preferably 0 to 1, and even more preferably 0. When m is equal to or greater than 2, and thus a plurality of R^{1y}s exists, the R^{1y}s may be the same or different from each other.

R^{1x} in the general formula (b1) is preferably a branched alkyl group from the viewpoint of better achieving the effect of the present invention.

Examples of the glycidyl ether compound include 2-ethylethyl glycidyl ether, 2-methylhexyl glycidyl ether, 2-ethylhexyl glycidyl ether, 2-propyllhexyl glycidyl ether, 3-methylhexyl glycidyl ether, 3-ethylhexyl glycidyl ether, 3-propyllhexyl glycidyl ether, isononyl glycidyl ether, caprinoyl glycidyl ether, lauryl glycidyl ether, and myristyl glycidyl ether. Among them, 2-ethylhexyl glycidyl ether is preferred.

### <Antioxidant (C)>

The lubricating oil composition for refrigerators according to an embodiment of the present invention preferably further contains an antioxidant (C).

Preferred examples of the antioxidant (C) include a phenolic antioxidant such as 2,6-di-tert-butyl-4-methylphenol, 2,6-di-tert-butyl-4-ethylphenol, or 2,2'-methylenebis(4-methyl-6-tert-butylphenol), and an amine-type antioxidant such as phenyl-α-naphthylamine or N,N'-diphenyl-p-phenylenediamine. From the viewpoint of the effect and economy, the content of the antioxidant (C) is preferably 0.01 to 1.0% by mass, more preferably 0.05 to 0.7% by mass, and even more preferably 0.1 to 0.5% by mass based on the total amount of the lubricating oil composition for refrigerators.

In the lubricating oil composition for refrigerators according to an embodiment of the present invention, the antioxidant (C) is preferably a phenolic antioxidant from the viewpoint of better achieving the effect of the present invention.

### <Other Additives>

The lubricating oil composition for refrigerators according to an embodiment of the present invention may further contain at least one additive selected from an extreme-pressure agent, an antifoaming agent, and at least one compound selected from an alicyclic epoxy compound and a terpene compound as long as the effect of the present invention is not impaired.

### (Extreme-Pressure Agent)

Examples of the extreme-pressure agent include a phosphorus-based extreme pressure agent, such as a phosphate ester, an acidic phosphate ester, a phosphite ester, an acidic phosphite ester, or an amine salt thereof.

Among these phosphorus-based extreme-pressure agents, tricresyl phosphate, trithiophenyl phosphate, tri(nonylphenyl) phosphite, dioleyl hydrogen phosphite and 2-ethylhexyldiphenyl phosphite are particularly preferred from the viewpoint of extreme-pressure properties and frictional properties.

The content of the phosphorus-based extreme pressure agent is preferably not less than 0.1% by mass, more preferably not less than 0.3% by mass, and even more preferably not less than 0.5% by mass based on the total amount of the lubricating oil composition for refrigerators.

### (Antifoaming Agent)

The antifoaming agent is exemplified by a silicone oil and a fluorinated silicone oil.

The content of the antifoaming agent is preferably 0.005 to 5% by mass, more preferably 0.005 to 0.5% by mass based on the total amount of the lubricating oil composition for refrigerators.

### (Alicyclic Epoxy Compound and Terpene Compound)

The alicyclic epoxy compound is a compound having an alicyclic group and an epoxy group. Specific examples of the alicyclic epoxy compound include 1,2-epoxycyclohexane, 1,2-epoxycyclopentane, 3,4-epoxycyclohexylmethyl-3,4-epoxycyclohexane carboxylate, bis(3,4-epoxycyclohexylmethyl)adipate, exo-2,3-epoxynorbornane, bis(3,4-epoxy-6-methylcyclohexylmethyl)adipate, 2-(7-oxabicyclo[4.1.0]hept-3-yl)-spiro[1,3-dioxane-5,3'-[7]oxabicyclo[4.1.0]heptane], 4-(1'-methylepoxyethyl)-1,2-epoxy-2-methylcyclohexane, and 4-epoxyethyl-1,2-epoxycyclohexane.

A monoterpene compound, for example, is preferred as the terpene compound. Examples of the monoterpene compound include monocyclic monoterpene compounds having a cyclohexane ring, such as limonene oxide, d-limonene, 1-limonene, α-pinene, β-pinene, α-terpinene, and γ-terpinene.

The content of the at least one compound selected from an alicyclic epoxy compound and a terpene compound is preferably not less than 0.1% by mass based on the total amount of the lubricating oil composition for refrigerators.

### [Physical Properties of Lubricating Oil Composition for Refrigerators]

### (Oil Appearance and Precipitate)

The lubricating oil composition for refrigerators according to an embodiment of the present invention preferably has an oil appearance value of not more than 0.5 (L0.5) after the below-described thermal stability test. Further, it is preferred that no precipitate be produced by the thermal stability test.

### (Fluorine Content)

The lubricating oil composition for refrigerators according to an embodiment of the present invention preferably has, after the below-described thermal stability test, a fluorine content of not more than 50 mg/L, more preferably not more than 45 mg/L, and even more preferably not more than 40 mg/L based on the total amount of the lubricating oil composition for refrigerators.

### [Method for Lubricating Refrigerator Using the Lubricating Oil Composition for Refrigerators of the Invention]

The lubricating oil composition for refrigerators of the present invention is to be used in a refrigerator using the refrigerant which comprises difluoromethane (R32), trifluoroiodomethane (CF₃I) and at least one compound (α) selected from saturated fluorinated hydrocarbon compounds (HFC) other than difluoromethane (R32).

In a method for lubricating a refrigerator using the lubricating oil composition for refrigerators of the present invention, the refrigerant and the lubricating oil composition are preferably used at a mass ratio (refrigerant/lubricating oil composition) of 99/1 to 10/90, more preferably 95/5 to 20/80, even more preferably 95/5 to 30/70.

When the amount of the refrigerant falls within the above range, the refrigeration capacity and the lubricating performance can be better achieved. While the lubricating oil composition for refrigerators of the present invention can be used in various refrigerators, it can be especially preferably used in a compression refrigeration cycle of a compression refrigerator.

In one embodiment of the present invention, there is also provided a mixture of the refrigerant and the lubricating oil composition for refrigerators. The refrigerant/lubricating oil composition content ratio by mass in the mixture is preferably 99/1 to 10/90, more preferably 95/5 to 20/80, even more preferably 95/5 to 30/70.

### [Refrigerator]

Refrigerators in which the lubricating oil composition for refrigerators of the present invention can be applied have a refrigeration cycle including a compressor, a condenser, an expansion mechanism (such as an expansion valve) and an evaporator as essential components, or a refrigeration cycle including a compressor, a condenser, an expansion mechanism, a drier and an evaporator as essential components, and use, as a refrigerator oil, the above-described lubricating oil composition for refrigerators of the present invention and use the above-described refrigerant as a refrigerant.

### [System Using the Lubricating Oil Composition for Refrigerators]

The lubricating oil composition for refrigerators of the present invention can be used in various systems, such as car air-conditioners, electromotive car air-conditioners, gas heat pumps, air conditioners, refrigerators, automatic vending machines, showcases, hot-water supply systems, refrigerating systems or heating systems.

In the present invention, the moisture content in such a system is preferably not more than 300 ppm by mass, more preferably not more than 200 ppm by mass. The residual air partial pressure in such a system is preferably not more than 10 kPa, more preferably not more than 5 kPa.

In the present invention, the moisture content in such a system can be measured according to JIS K 2275-3:2015 (Crude Petroleum and Petroleum Products--Determination of Moisture Content--Part 3: Coulometric Karl Fischer Titration Method).

### Examples

The following examples illustrate the present invention in greater detail and are not intended to limit the scope of the invention.

### <Properties of Base Oil (A)>

The properties of the base oil (A) were determined in the following manner.

### (1) Hydroxyl Number

Measured according to JIS K 0070:1992.

### (2) 100°C Kinematic Viscosity

Measured according to JIS K 2283:2000, using a glass capillary viscometer.

### (3) Number-Average Molecular Weight (Mn)

The number-average molecular weight was measured by gel permeation chromatography (GPC).

The GPC was performed using two columns "TSKgel SuperMultipore HZ-M" manufactured by Tosoh Corporation, connected in series, using tetrahydrofuran as an eluent, and using a refractive index detector (RI detector). The number average molecular weight (Mn) was determined using polystyrene as a standard sample.

### (4) Moisture Content

Measured according to JIS K 2275-3:2015 (Crude Petroleum and Petroleum Products--Determination of Moisture Content--Part 3: Coulometric Karl Fischer Titration Method".

### <Preparation of Lubricating Oil Composition for Refrigerators>

The following components were used to prepare lubricating oil compositions for refrigerators.

### (1) Base Oil (A)

- PVE-A: polyethyl vinyl ether
- PVE-B: copolymer of polyethyl vinyl ether (PEVE) and polyisobutyl vinyl ether (PIBVE) (PEVE/PIBVE = 9/1 (molar ratio))
- PAG: polyoxypropylene glycol
- ECP: copolymer of polypropylene glycol (PPG) and polyethyl vinyl ether (PEVE) (PPG/PEVE = 5/5 (molar ratio))
- POE: ester of pentaerythritol with a mixture of octanoic acid (C8 acid) and nonanoic acid (C9 acid) (C8 acid/C9 acid = 1/1.1 (molar ratio))

The properties of the base oil (A) are shown in Table 1.

**Table 1**

| Type of base oil | Hydroxyl number (mgKOH/g) | 100°C kinematic viscosity (mm²/s) | Number- average molecular weight (Mn) |
|---|---|---|---|
| PVE-A | 3.0 | 9.5 | 865 |
| PVE-B | 2.0 | 8.0 | 665 |
| PAG | 1.0 | 10.3 | 1020 |
| ECP | 1.0 | 10.5 | 870 |
| POE | 1.0 | 8.5 | 670 |

### (2) Antioxidant (C)

2,6-di-tert-butyl-4-methylphenol

### (3) Aliphatic Epoxy Compound (B)

2-ethylhexyl glycidyl ether

### (4) Other Additives

Tricresyl phosphate and silicone antifoaming agent

### [Examples 1 to 9 and Comparative Examples 1 to 7]

The base oil (A), the aliphatic epoxy compound (B), the antioxidant (C) and the other additives were mixed in the amounts shown in Tables 2 to 5 to prepare lubricating oil compositions for refrigerators. Using a refrigerant prepared by mixing difluoromethane (R32), trifluoroiodomethane (CF₃I) and 1,1,1,2,2-pentafluoroethane (R125) at a mass ratio of 50.0 : 38.0 : 12.0, the thermal stability of each lubricating oil composition for refrigerators was evaluated.

### < Thermal Stability Evaluation Method>

An autoclave tube was filled with each of the lubricating oil compositions for refrigerators prepared in Examples 1 to 9 and Comparative Examples 1 to 7 and the above-described refrigerant (lubricating oil composition for refrigerators/refrigerant = 30 g/30 g, the moisture content in the lubricating oil composition for refrigerators: 500 ppm by mass, air content: 25 mL), and with a metal catalyst composed of iron, copper and aluminum. The autoclave tube was held under the temperature condition of 150°C for 7 days. Thereafter, the contents of the autoclave tube were visually checked for oil appearance and the presence or absence of a precipitate.

The oil appearance was evaluated in terms of the ASTM color. In particular, the oil appearance was rated as good when the ASTM color was not more than 0.5 (L0.5), and rated as poor when the ASTM color was more than 0.5 (L1.0, L1.5, etc.)

The results of the evaluation of thermal stability are shown in Tables 2 to 4.

**Table 2**

| | | | Examples | | | | |
|---|---|---|---|---|---|---|---|
| | | | 1 | 2 | 3 | 4 | 5 |
| Composition (% by mass) | Base oil (A) | PVE-A | 96.60 | - | - | - | - |
| | | PVE-A | - | 96.20 | - | - | - |
| | | PVE-A | - | - | 95.70 | - | - |
| | | PVE-A | - | - | - | 94.70 | - |
| | | PVE-A | - | - | - | - | 93.70 |
| | Antioxidant (C) | | 0.3 | 0.3 | 0.3 | 0.3 | 0.3 |
| | Aliphatic epoxy compound (B) | | 2.1 | 2.5 | 3.0 | 4.0 | 5.0 |
| | Other additives | | 1.0 | 1.0 | 1.0 | 1.0 | 1.0 |
| Thermal stability test | | Oil appearance | L0.5 | L0.5 | L0.5 | L0.5 | L0.5 |
| | | Precipitate | none | none | none | none | none |

**Table 3**

| | | | Examples | | | |
|---|---|---|---|---|---|---|
| | | | 6 | 7 | 8 | 9 |
| Composition (% by mass) | Base oil (A) | PVE-B | 95.70 | - | - | - |
| | | PAG | - | 95.70 | - | - |
| | | ECP | - | - | 95.70 | - |
| | | POE | - | - | - | 95.70 |
| | Antioxidant (C) | | 0.3 | 0.3 | 0.3 | 0.3 |
| | Aliphatic epoxy compound (B) | | 3.0 | 3.0 | 3.0 | 3.0 |
| | Other additives | | 1.0 | 1.0 | 1.0 | 1.0 |
| Thermal stability test | | Oil appearance | L0.5 | L0.5 | L0.5 | L0.5 |
| | | Precipitate | none | none | none | none |

**Table 4**

| | | | Comp. Examples | | |
|---|---|---|---|---|---|
| | | | 1 | 2 | 3 |
| Composition (% by mass) | Base oil (A) | PVE-A | 98.40 | - | - |
| | | PVE-A | - | 97.70 | - |
| | | PVE-A | - | - | 96.70 |
| | Antioxidant (C) | | 0.3 | 0.3 | 0.3 |
| | Aliphatic epoxy compound (B) | | 0.3 | 1.0 | 2.0 |
| | Other additives | | 1.0 | 1.0 | 1.0 |
| Thermal stability test | | Oil appearance | L4.0 | L2.5 | L1.0 |
| | | Precipitate | none | none | none |

**Table 5**

| | | | Comp. Examples | | | |
|---|---|---|---|---|---|---|
| | | | 4 | 5 | 6 | 7 |
| Composition (% by mass) | Base oil (A) | PVE-B | 98.40 | - | - | - |
| | | PAG | - | 98.40 | - | - |
| | | ECP | - | - | 98.40 | - |
| | | POE | - | - | - | 98.40 |
| | Antioxidant (C) | | 0.3 | 0.3 | 0.3 | 0.3 |
| | Aliphatic epoxy compound (B) | | 0.3 | 0.3 | 0.3 | 0.3 |
| | Other additives | | 1.0 | 1.0 | 1.0 | 1.0 |
| Thermal stability test | | Oil appearance | L4.0 | L3.5 | L3.5 | L4.0 |
| | | Precipitate | none | none | none | none |

The data in Tables 2 to 5 indicates the following.

As shown in Tables 2 and 3, the lubricating oil compositions for refrigerators of Examples 1 to 9, in which the content of the aliphatic epoxy compound (B) is more than 2.0% by mass, all had a good oil appearance and produced no precipitate. This indicates that the lubricating oil compositions for refrigerators of Examples 1 to 9 are all excellent in thermal stability.

In contrast, as shown in Tables 4 and 5, the lubricating oil compositions for refrigerators of Comparative Examples 1 to 7, in which the content of the aliphatic epoxy compound (B) is not more than 2.0% by mass, had poor oil appearance, indicating that the comparative compositions all have inferior thermal stability.

For the lubricating oil compositions for refrigerators of Examples 1, 3, 6, 7, 8, and 9, and Comparative Examples 1 to 7, their fluorine contents after the thermal stability test were measured. The results are shown in Tables 6 and 7.

The fluorine contents of the lubricating oil compositions for refrigerators after the thermal stability test were measured according to JIS K 0127:2013 (General Rules for Ion Chromatography).

**Table 6**

| | | | Examples | | | | | |
|---|---|---|---|---|---|---|---|---|
| | | | 1 | 3 | 6 | 7 | 8 | 9 |
| Composition (% by mass) | Base oil (A) | PVE-A | 96.60 | - | - | - | - | - |
| | | PVE-A | - | 95.70 | - | - | - | - |
| | | PVE-B | - | - | 95.70 | - | - | - |
| | | PAG | - | - | - | 95.70 | - | - |
| | | ECP | - | - | - | - | 95.70 | - |
| | | POE | | | | | | 95.70 |
| | Antioxidant (C) | | 0.3 | 0.3 | 0.3 | 0.3 | 0.3 | 0.3 |
| | Aliphatic epoxy compound (B) | | 2.1 | 3.0 | 3.0 | 3.0 | 3.0 | 3.0 |
| | Other additives | | 1.0 | 1.0 | 1.0 | 1.0 | 1.0 | 1.0 |
| Fluorine content after thermal stability test mg/L | | | 35 | 27 | 25 | 31 | 23 | 20 |

**Table 7**

| | | | Comp. Examples | | | | | | |
|---|---|---|---|---|---|---|---|---|---|
| | | | 1 | 2 | 3 | 4 | 5 | 6 | 7 |
| Composition (% by mass) | Base oil (A) | PVE-A | 98.40 | - | - | - | - | - | - |
| | | PVE-A | - | 97.70 | - | - | - | - | - |
| | | PVE-A | - | - | 96.70 | - | - | - | - |
| | | PVE-B | | | | 98.40 | | | |
| | | PAG | - | - | - | - | 98.40 | - | - |
| | | ECP | - | - | - | - | - | 98.40 | - |
| | | POE | | | | | - | - | 98.40 |
| | Antioxidant (C) | | 0.3 | 0.3 | 0.3 | 0.3 | 0.3 | 0.3 | 0.3 |
| | Aliphatic epoxy compound (B) | | 0.3 | 1.0 | 2.0 | 0.3 | 0.3 | 0.3 | 0.3 |
| | Other additives | | 1.0 | 1.0 | 1.0 | 1.0 | 1.0 | 1.0 | 1.0 |
| Fluorine content after thermal stability test mg/L | | | 107 | 97 | 73 | 120 | 94 | 97 | 71 |

The data in Tables 6 and 7 indicates the following.

As shown in Table 6, the lubricating oil compositions for refrigerators of Examples 1, 3, 6, 7, 8, and 9, in which the content of the aliphatic epoxy compound (B) is more than 2.0% by mass, all had a low fluorine content of not more than 50 mg/L after the thermal stability test. This indicates that the lubricating oil compositions for refrigerators of Examples 1, 3, 6, 7, 8, and 9 are so excellent in thermal stability that thermal decomposition of the refrigerant is prevented.

In contrast, as shown in Table 7, the lubricating oil compositions for refrigerators of Comparative Examples 1 to 7, in which the content of the aliphatic epoxy compound (B) is not more than 2.0% by mass, all had a high fluorine content of more than 70 mg/L after the thermal stability test. This indicates that the lubricating oil compositions for refrigerators of Comparative Examples 1 to 7 have inferior thermal stability, and are likely to cause thermal decomposition of the refrigerant.

## Claims

1. A lubricating oil composition for refrigerators and for use with a refrigerant comprising difluoromethane (R32), trifluoroiodomethane (CF₃I), and at least one compound (α) selected from saturated fluorinated hydrocarbon compounds (HFC) other than difluoromethane (R32), the composition comprising:
a base oil (A) comprising at least one selected from a polyoxyalkylene glycol, a polyvinyl ether, a copolymer of a poly(oxy)alkylene glycol or a monoether thereof and a polyvinyl ether, and a polyol ester; and an aliphatic epoxy compound (B),
wherein the content of the aliphatic epoxy compound (B) is more than 2.0% by mass based on the total amount of the lubricating oil composition for refrigerators.

2. The lubricating oil composition for refrigerators according to claim 1, wherein in the refrigerant, the total content of difluoromethane (R32) and trifluoroiodomethane (CF₃I) is not less than 20% by mass and not more than 99% by mass based on the total amount of the refrigerant, the content of trifluoroiodomethane (CF₃I) is not less than 5% by mass and not more than 80% by mass based on the total amount of the refrigerant, and the content of the compound (α) is not less than 0.1% by mass based on the total amount of the refrigerant.

3. The lubricating oil composition for refrigerators according to claim 1 or 2, wherein in the refrigerant, the total content of difluoromethane (R32) and trifluoroiodomethane (CF₃I) is not less than 30% by mass and not more than 95% by mass based on the total amount of the refrigerant, the content of trifluoroiodomethane (CF₃I) is not less than 10% by mass and not more than 60% by mass based on the total amount of the refrigerant, and the content of the compound (α) is not less than 1% by mass based on the total amount of the refrigerant.

4. The lubricating oil composition for refrigerators according to any one of claims 1 to 3, wherein in the refrigerant, the total content of difluoromethane (R32) and trifluoroiodomethane (CF₃I) is more than 50% by mass and not more than 90% by mass based on the total amount of the refrigerant, the content of trifluoroiodomethane (CF₃I) is not less than 15% by mass and not more than 50% by mass based on the total amount of the refrigerant, and the content of the compound (α) is not less than 5% by mass based on the total amount of the refrigerant.

5. The lubricating oil composition for refrigerators according to any one of claims 1 to 4, wherein the compound (α) is 1,1,1,2,2-pentafluoroethane (R125).

6. The lubricating oil composition for refrigerators according to any one of claims 1 to 5, further comprising an antioxidant (C).

7. The lubricating oil composition for refrigerators according to any one of claims 1 to 6, which is to be used in an automotive air conditioner, an electric automotive air conditioner, a gas heat pump, an air conditioner, a refrigerator, an automatic vending machine, a showcase, a hot-water supply system, a refrigerating system or a heating system.

8. A mixture comprising the lubricating oil composition for refrigerators according to any one of claims 1 to 7, and a refrigerant comprising difluoromethane (R32), trifluoroiodomethane (CF₃I), and at least one compound (α) selected from saturated fluorinated hydrocarbon compounds (HFC) other than difluoromethane (R32).
